# EUROPEAN PATENT SPECIFICATION

(11) **EP 1 829 717 B1**
(45) Date of publication and mention of the grant of the patent: **17.12.2008**
(21) Application number: 07111014.2
(22) Date of filing: 08.05.2003
(51) Int. Cl.: B60G 7/00, B60B 37/00, B60B 35/02, B62D 17/00, B60G 3/01

(54) **Mounting structure for a wheel carrier of a motor vehicle**
Montageanordnung für einen Radträger eines Kraftfahrzeugs
Structure de montage d'un porte-roue d'un véhicule automobile

(30) Priority: 10.05.2002 IT TO20020397
(43) Date of publication of application: 05.09.2007
(62) Divisional of application: 03010360.0
(73) Proprietor: Sistemi Sospensioni S.p.A., 20011 Corbetta (MI) (IT)
(72) Inventor: Gerrard, Miles Barnaby, 2100 Koebenhaven OE (DK)
(74) Representative: Rondano, Davide

(56) References cited:
- DE-A- 2 324 645
- DE-B- 1 077 538
- FR-A- 2 484 926
- FR-A- 2 621 277
- US-A- 3 693 746
- PATENT ABSTRACTS OF JAPAN vol. 013, no. 484 (M-886), 2 November 1989 (1989-11-02) -& JP 01 190511 A (MAZDA MOTOR CORP), 31 July 1989 (1989-07-31)

## Description

The present invention relates to a mounting structure for a wheel carrier of a motor vehicle, intended to connect the wheel carrier with a structural member of the suspension of the wheel.

In the following description the invention will be illustrated for the sake of brevity with reference to its application for the mounting of the wheel carrier of a non-steering wheel. This application, however, is not to be construed as limiting the scope of protection of the patent, being it clear for the skilled person in the art that the structure of the invention is also suitable for a steering wheel.

Each of the non-steering wheels of a motor vehicle is rotatably mounted about a pin-like member, known as spindle, which can be fixed directly onto a member of the suspension of that wheel, such as a trailing arm connected with a twist beam in an interconnected suspension system, or with a strut member articulated in its turn to at least one member of the suspension, such as a pair of wishbones in an independent suspension system.

Due to its simplicity, one of the most commonly used suspension arrangements for the rear wheels is the interconnected suspension system, in which a transverse twist beam is connected at its lateral ends with a pair of trailing arms, each for a respective wheel. These arms are articulated at their front ends to the vehicle structure and have respective wheel carrier spindles connected therewith usually by welding. Such a rigid mounting of the wheel carrier on a structural member of the suspension (here, a trailing arm) causes the displacement of the wheel carrier under load, brought on by the lateral forces during cornering and the longitudinal forces during braking or in case of impact, to be controlled mainly by the compliance of the bushes for articulation of the suspension member to the vehicle structure. Where simple suspension arrangements, such as the above-mentioned interconnected suspension system, are used, the unavoidable conflict between the requirements for longitudinal flexibility on the one hand and transverse stiffness of the suspension system on the other hand cannot be solved satisfactorily, since the mere connection of the suspension system to the vehicle structure by two bushes does not provide the required behaviour.

Even independent suspension systems, which in their simplest embodiments comprise one or two transverse arms to which the strut and its wheel carrier spindle are articulated, do not enable a satisfactory control of the elastic behaviour of the suspension in response to the forces acting on the wheel carrier, unless more complex and expensive arrangements, such as, for example, the multilink systems, in which a number of rods connect the wheel carrier strut with the vehicle structure, are adopted.

FR-A-2 484 926 discloses a motor-vehicle suspension comprising, for each wheel, two flexible blades which extend transversely in overlapping, but spaced, relationship and are secured at their transversely inner ends to a central part of the vehicle structure and at their transversely outer ends to a mounting member for the wheel spindle. Each blade has a double bending deformation both in rest condition and during vertical bump and rebound motion of the wheel.

A mounting structure for connection of a spindle of a motor-vehicle wheel with a structural member of the suspension of that wheel having the features set forth in the preamble of independent claim 1 is known from JP 01 190 511. According to this known solution, the mounting structure includes a support body to which the spindle is attached and a pair of flexible blade-like elements having first ends for connection to the structural member, the blade-like elements being each compliant under bending about an axis perpendicular to the respective middle plane and being so orientated as to provide the mounting structure with a first structural degree of freedom about a first axis of predetermined orientation.

It is the object of the present invention to provide a simple and inexpensive arrangement for improving the elasto-kinematic performances of a suspension for a motor-vehicle wheel.

This object is fully achieved according to the present invention by virtue of a mounting structure as defined in independent Claim 1 for connection of the wheel carrier of a motor-vehicle wheel with a structural member of the suspension of that wheel. Preferred embodiments of the structure of the invention are specified in dependent claims.

In short, the invention is based on the idea of providing a flexible connection between the wheel carrier and a structural member of the suspension, such as the trailing arm of a twist-beam axle or a wishbone, through a structure capable of providing at least one degree of freedom of the structural type about a shear axis, the orientation of which can be determined at the design stage depending on the required operational specifications. By virtue of such a flexible connection, the wheel carrier tends to swing about the shear axis under the effect of the forces acting on the wheel, instead of transmitting rigidly these forces to the associated structural member of the suspension.

Preferably, the mounting structure comprises a pair of properly orientated blade-like elements, connected on the one side with a plate portion carrying the wheel carrier spindle and on the opposite side with the associated structural member of the suspension.

The invention will be described hereinafter in greater detail, purely by way of non-limiting example, with reference to the appended drawings, in which:
Figures 1, 2 and 3 are perspective views of respective embodiments (not forming part of the invention as claimed) of a mounting structure with one structural degree of freedom, for connection of the wheel-carrier spindle with a trailing arm of an interconnected suspension system;
Figure 4 is a perspective view of a preferred embodiment of a mounting structure with two structural degrees of freedom according to the invention, for connection of the wheel carrier spindle with a trailing arm of an interconnected suspension system; and
Figures 5A, 5B and 5C are a perspective view, a plan view and a side elevation view, respectively, of a further embodiment (also not forming part of the invention as claimed) of a mounting structure with one structural degree of freedom for connection of the wheel carrier spindle with a pair of wishbones of an independent suspension system.

In the description and the claims which follow, terms such as "longitudinal" and "transverse", "inner" and "outer", "front" and "rear" are to be intended as referred to the mounted condition on the vehicle.

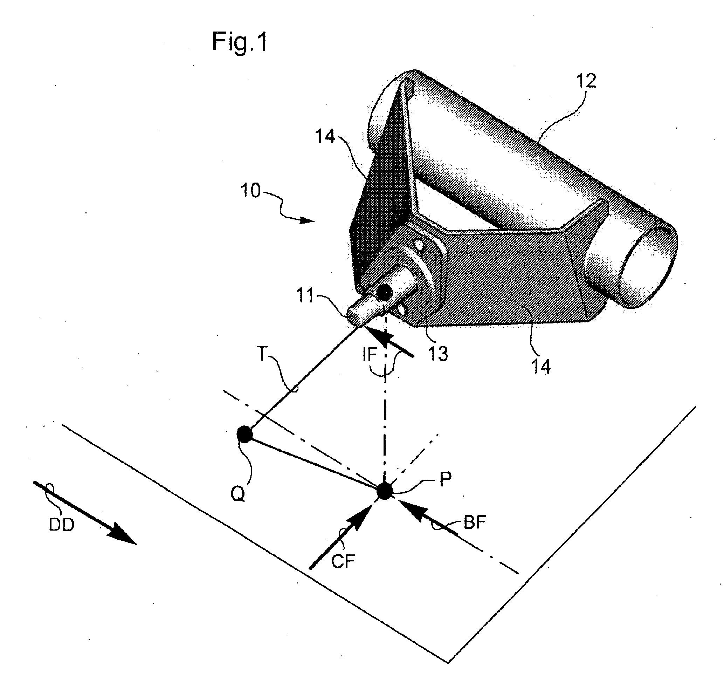

By referring at first to Figure 1, a mounting structure for connection of the spindle 11 of a wheel with an arm 12 of the suspension of that wheel, such as, for example, a trailing arm attached to an end of a twist beam in an interconnected rear suspension system, is generally indicated 10. The structure 10 comprises basically a portion 13 for support of the spindle 11, which forms a longitudinal vertical wall on the outer surface of which there is attached the spindle, and a pair of flexible elements 14 for connection between the portion 13 and the suspension arm 12. In the embodiment illustrated in Figure 1, the elements 14 are formed integrally with the portion 13 and welded at their free ends to the arm 12.

Each connecting element 14 is a straight beam the cross-section of which has inertial characteristics such that the element is compliant under bending in a direction perpendicular to its own longitudinal axis. The cross-section may be, for example, axially symmetrical about first and second axes perpendicular to each other, the moment of inertia about the first axis being much greater than that about the second axis, whereby the element 14 is compliant under bending about this second axis. As shown in the figures, the elements 14 are formed preferably as blades with a thin rectangular cross-section, so as to be flexible in a direction perpendicular to the middle plane of the cross-section.

By virtue of the inherent flexibility of the connecting elements 14, the structure 10 does not act as a rigid body, but provides a degree of freedom of "structural" type about an axis T, or shear axis, since it allows a certain amount of torsional deformation about this axis as a result of the stresses transmitted by the wheel. The axis T may be constructed, approximately, as intersection of the planes passing through the longitudinal axis and the axis of bending of both elements 14. Therefore, in case of elements with thin rectangular cross-section the axis T is obtained by intersecting the middle planes of these elements.

The degree of freedom about the shear axis T has been previously referred to as "structural", since it is not defined by a geometrical constraint (as a kinematic degree of freedom is, on the contrary), but by the characteristics of flexibility of the structure. The orientation of the axis T and the stiffness of the structure in response to torsional stresses about that axis depend on the inertial characteristics of the cross-sections of the elements 14. Therefore, by properly selecting the shape and the orientation of these cross-sections, an elastic behaviour of the structure fulfilling the required design specifications is attainable.

In particular, it is possible to concentrate the required compliance of the suspension in the wheel carrier mounting structure, leaving to the articulation bushes (preferably made of damping material) substantially the sole task of providing for insulation of high frequencies. Thus, the traditional shortcoming of assigning the task of solving the above compromise between comfort and handling just to the articulation bushes of the suspension is avoided and the different operational requirements are allotted in a better way among the different parts of the suspension system.

In the embodiment of Figure 1, the two flexible connecting elements 14 define a shear axis T passing through the axis of rotation of the wheel and inclined both in a horizontal plane and in a longitudinal vertical plane. By referring to Figure 1, the point of intersection between the axis T and the road surface is indicated Q, whereas the theoretical point of contact between the wheel (not shown) and the road surface is indicated P.

Moreover, the three forces acting on the wheel, that is, the braking force, the cornering force and the longitudinal impact force are indicated BF, CF and IF, respectively. The braking force BF is applied at the point of contact P and acts longitudinally in the opposite direction to the direction of driving DD. The cornering force CF is applied at the point of contact P and acts transversally inwards or outwards depending on the vehicle moving along a leftward or rightward curve, respectively. Finally, the impact force IF is applied at the centre of the wheel and acts longitudinally opposite to the direction of driving DD.

The braking force BF and the impact force IF act with a short, when not even null, lever arm with respect to the shear axis T, whereby the mounting structure 10 undergoes a very small torsional yielding about the axis T. The structure 10, therefore, reacts almost rigidly to these forces. The lateral cornering force CF, instead, acts with a large lever arm and then brings on a considerable torsional deformation of the structure. However, the effect of this deformation, which increases the toe-in of the wheel, is advantageous, for example, in an interconnected suspension system, since it compensates for the opposite effect due to the rigid rotation of the twist beam and trailing arms assembly allowed by the compliance of the bushes of articulation of the arms.

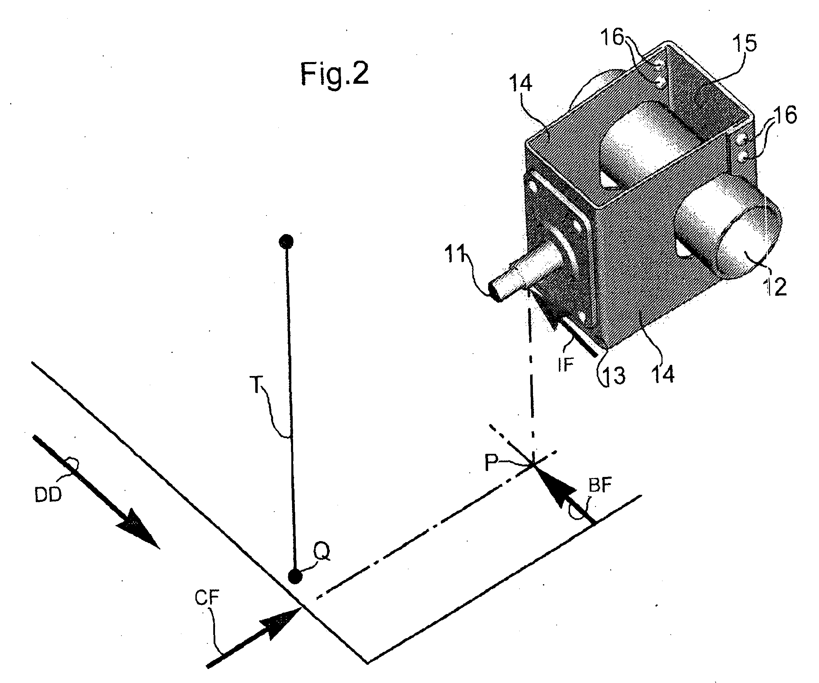

In the embodiment of Figure 2, the two flexible connecting elements 14 are not directly attached to the suspension arm 12, but are secured, for example by means of rivets 16, to a bottom plate 15 welded to the arm 12. Here, the shear axis T is orientated vertically and is located outside the wheel, substantially in the same vertical plane passing through the axis of rotation of the wheel. With the same reasoning as above, it can be appreciated that this second embodiment provides a high stiffness with respect to the cornering force, but a low stiffness with respect to both the braking force and the impact force, thereby ensuring a good damping of bumps and a good handling in curve.

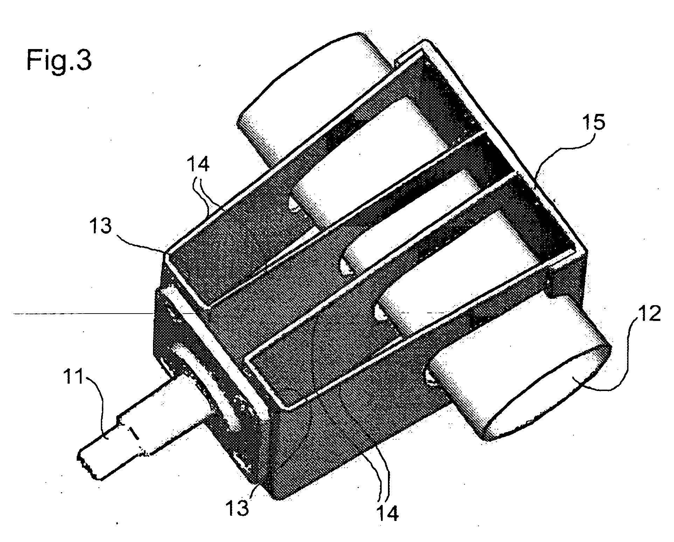

A third embodiment of a mounting structure with one structural degree of freedom is illustrated in Figure 3, where parts and elements identical or corresponding to those of Figures 1 and 2 have been given the same reference numerals.

In this case, there are provided two pairs of flexible connecting elements 14 in the form of vertical thin plates, converging two by two towards the outside of the vehicle. As in the example of Figure 2, the flexible elements 14 are attached to a bottom plate 15 welded to the arm 12. Moreover, the elements 14 are integrally connected two by two, on the outer side, by a pair of longitudinal vertical walls 13 to which the wheel spindle 11 is secured. The structure is designed so as to provide a shear axis orientated like that of Figure 2, but to reduce stresses on the flexible elements.

As can be seen, regardless of the number and arrangement of the connecting elements, the idea on which the invention is based is to provide a flexible mounting structure adapted to allow a given torsional compliance about a shear axis of predetermined orientation.

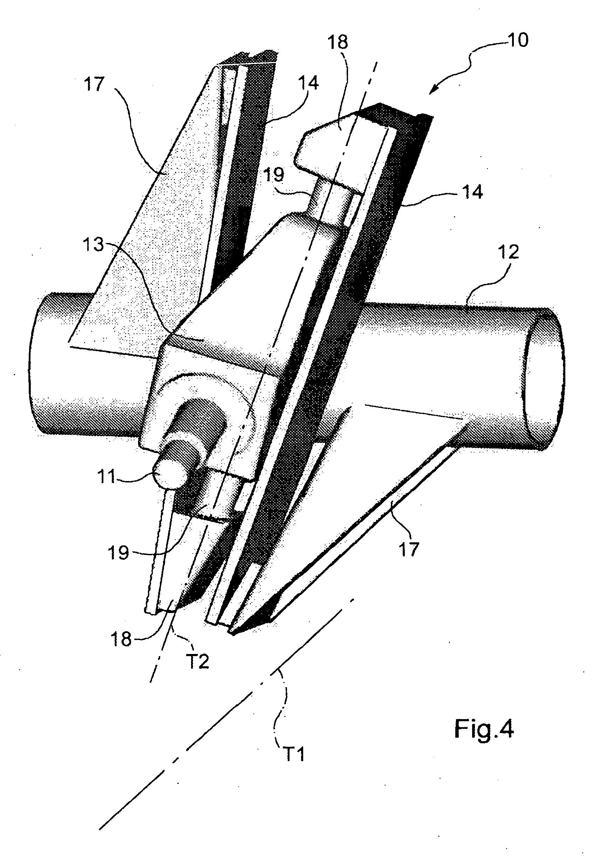

A preferred embodiment of the invention, relating to a mounting structure with two structural degrees of freedom, is shown in Figure 4, where parts and elements identical or corresponding to those of the preceding figures have been given the same reference numerals.

According to this embodiment, a support body 13 provided with a wheel carrier 11 is connected at its upper and lower portions, through a pair of substantially coaxial, cylindrical portions 19, to respective abutment members 18 attached to the free ends of two flexible blade-like elements 14, the opposite ends of which are connected with respective bracket structures 17 carried by the longitudinal arm 12 of the suspension.

According to the example of Figure 4, the two bracket structures 17 extend substantially perpendicular to each other, the one vertically upwards and the other transversely towards the outside of the vehicle, and the blades 14 are orientated such that they converge downwards. By virtue of such an arrangement, the mounting structure has a first shear axis T1, theoretically defined by the geometrical intersection between the middle planes of the blades 14, and a second shear axis T2 corresponding approximately to the axis of the two cylindrical portions 19. The compliance of the structure about this second axis T2 is ensured by the low torsional stiffness of the blades 14.

Clearly, the provision of a further structural degree of freedom gives a wider liberty of action to the designer of the suspension system, since by properly setting the orientation of the two shear axes it is possible to satisfy conflicting operational specifications, which otherwise could be hardly accommodated with each other.

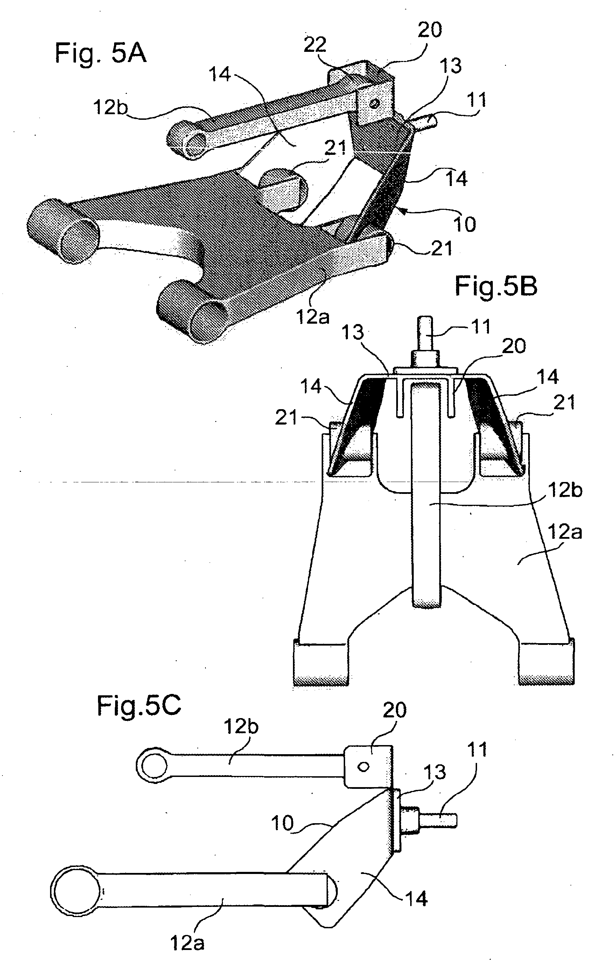

Finally, Figures 5A, 5B and 5C show an example of the application to an independent suspension system, in which the spindle 11 of the wheel is secured to a flexible mounting structure 10, which has only one structural degree of freedom and is articulated to a first lower transverse arm 12a by means of a pair of bushes 21 and to a second upper transverse arm 12b by means of a bush 22.

The arrangement of the mounting structure 10 is similar to that of Figure 1, in which the spindle 11 is attached to a central plate portion 13 from the opposite ends of which two blade-like elements 14 extend transversely inwards, the elements being articulated here to the lower arm 12a by means of the bushes 21. As to the orientation of the blades 14, similar remarks to those set forth above with reference to the embodiment of Figure 1 apply. A C-shaped fixing bracket 20 extends upwards from the plate portion 13 for articulation to the upper arm 12b by means of a bush 22.

Clearly, the highest stiffness of the mounting structure is achieved with the geometrical axes of the bushes 21 arranged perpendicular to the middle plane of the blades 14. However, nothing prevents from orientating in a different way the axes of the bushes with respect to the blades, as illustrated in the embodiment of Figure 5.

Naturally, the principle of the invention remaining unchanged, embodiments and manufacturing details may vary widely from those described and illustrated purely by way of non-limiting example.

## Claims

1. Mounting structure (10) for connection of a spindle (11) of a motor-vehicle wheel with a structural member (12) of the suspension of that wheel, the structure (10) comprising a support body (13) to which the spindle (11) is attached and a pair of flexible blade-like elements (14) having first ends for connection to the structural member (12),
wherein the blade-like elements (14) are each compliant under bending about an axis perpendicular to the respective middle plane and under torsion about an axis parallel to the respective middle plane and are so orientated as to provide the mounting structure (10) with a first structural degree of freedom about a first shear axis (T1) of predetermined orientation,
the mounting structure (10) being **characterised in that** it further comprises a pair of substantially coaxial attachment portions (19) by means of which the support body (13) is attached to second ends of the blade-like elements (14), the blade-like elements (14) and the attachment portions (19) being so configured as to provide the mounting structure (10) with a second structural degree of freedom about a second shear axis (T2) substantially corresponding to the axis of the attachment portions (19).

2. Mounting structure according to Claim 1, wherein the blade-like elements (14) are inclined to each other, whereby the first shear axis (T1) is defined at the intersection between the middle planes of the blade-like elements (14).

3. Mounting structure according to Claim 1 or Claim 2, wherein the blade-like elements (14) are arranged in a substantially upright position, so that the one bears the support body (13) at the upper portion thereof while the other bears the spindle (11) at the lower portion thereof.

4. Mounting structure according to Claim 3, further comprising a pair of bracket bodies (17) attached to the structural member (12) of the suspension, the blade-like elements (14) being cantilevered on the bracket bodies (17) at their vertically opposite sides.

5. Mounting structure according to Claim 4, wherein the bracket bodies (17) project from the structural member (12) of the suspension, the one essentially vertically and the other essentially transversely, and wherein the blade-like elements (14) converge to each other downwards, thereby assuming a substantially V-shaped arrangement.

## Patentansprüche

1. Befestigungsaufbau (10) für die Verbindung eines Achszapfens (11) für das Rad eines Kraftfahrzeuges mit einem Strukturelement (12) der Aufhängung des Rades, wobei der Aufbau (10) einen Trägerkörper (13), an dem der Achszapfen (11) angebracht ist, und zwei fiexible, schwertartige Elemente (14) enthält, die erste Enden für die Verbindung mit dem Strukturelement (12) aufweisen, wobei die schwertartigen Elemente (14) jeweils einer Biegung um eine Achse senkrecht zur jeweiligen Mittelebene und einer Torsion um eine Achse parallel zur jeweiligen Mittelebene nachgeben können und derart ausgerichtet sind, dass sie dem Befestigungsaufbau (10) einen ersten strukturellen Freiheitsgrad um eine erste Scherachse (T1) vorgegebener Ausrichtung verleihen,
wobei der Befestigungsaufbau (10) **dadurch gekennzeichnet ist, dass** er weiterhin zwei im wesentlichen koaxiale Anbringungsabschnitte (19) enthält, mit deren Hilfe der Trägerkörper (13) an den zweiten Enden der schwertähnlichen Elemente (14) angebracht ist, wobei die schwertähnlichen Elemente (14) und die Anbringungsabschnitte (19) so beschaffen sind, dass sie dem Befestigungsaufbau (10) einen zweiten strukturellen Freiheitsgrad um eine zweite Scherachse (T2) verleihen, die im wesentlichen der Achse der Anbringungsabschnitte (19) entspricht.

2. Befestigungsaufbau nach Anspruch 1, bei dem die schwertartigen Elemente (14) zueinander geneigt sind, wobei die erste Scharachse (T1) an der Schnittlinie zwischen den Mittelebenen der schwertartigen Elemente (14) definiert ist.

3. Befestigungsaufbau nach Anspruch 1 oder 2, bei dem die schwertähnlichen Elemente (14) im wesentlichen aufrechten stehend so angeordnet sind, dass das eine Element an seinem oberen Teil den Trägerkörper (13) trägt, während das andere Element an seinem unteren Teil den Achszapfen (11) trägt.

4. Befestigungsaufbau nach Anspruch 3, weiterhin enthaltend ein Paar von halterungsartigen Körpern (17), die am Strukturelement (12) der Aufhängung befestigt sind, wobei die schwertartigen Elemente (14) an den halterungsartigen Körpern (17) an ihren vertikal gegenüberliegenden Seiten auskragen.

5. Befestigungsaufbau nach Anspruch 4, bei dem die halterungsartigen Körper (17) vom Strukturelement (12) der Aufhängung vorspringen, der eine im wesentlichen vertikal und der andere im wesentlichen in Querrichtung, wobei die schwertartigen Elemente (14) zueinander nach unten zusammenlaufen, wodurch sie eine im wesentlichen V-förmige Anordnung annehmen.

## Revendications

1. Structure de montage (10) destinée à raccorder une fusée (11) d'une roue de véhicule à moteur à un élément structurel (12) de la suspension de cette roue, la structure (10) comprenant un corps de support (13) auquel la fusée (11) est fixée et une paire d'éléments en forme de lames flexibles (14) ayant des premières extrémités destinées à un raccordement à l'élément structurel (12), dans laquelle les éléments en forme de lames (14) sont chacun élastiques à la courbure autour d'un axe perpendiculaire au plan intermédiaire respectif et à la torsion autour d'un axe parallèle au plan intermédiaire respectif et sont orientés de telle manière à conférer à la structure de montage (10) un premier degré structurel de liberté autour d'un premier axe de cisaillement (T1) d'orientation prédéterminée,
la structure de montage (10) étant **caractérisée en ce qu'**elle comprend en outre une paire de parties de fixation sensiblement coaxiales (19) au moyen desquelles le corps de support (13) est fixé aux secondes extrémités des éléments en forme de lame (14), les éléments en forme de lames (14) et les parties de fixation (19) étant configurés de telle manière à conférer à la structure de montage (10) un second degré structurel de liberté autour d'un second axe de cisaillement (T2) correspondant sensiblement à l'axe des parties de fixation (19).

2. Structure de montage selon la revendication 1, dans laquelle les éléments en forme de lames (14) sont inclinés l'un par rapport à l'autre, ce qui entraîne que le premier axe de cisaillement (T1) est défini au niveau de l'intersection entre les plans intermédiaires des éléments en forme de lames (14).

3. Structure de montage selon la revendication 1 ou la revendication 2, dans laquelle les éléments en forme de lames (14) sont agencés dans une position sensiblement verticale, de telle sorte que l'un porte le corps de support (13) au niveau de sa partie supérieure tandis que l'autre porte la fusée (11) au niveau de sa partie inférieure.

4. Structure de montage selon la revendication 3, comprenant en outre une paire de corps de soutien (17) fixée sur l'élément structurel (12) de la suspension, les éléments en forme de lames (14) étant en porte à faux sur les corps de soutien (17) au niveau de leurs côtés verticalement opposés.

5. Structure de montage selon la revendication 4, dans laquelle les corps de soutien (17) font saillie depuis l'élément structurel (12) de la suspension, l'un essentiellement dans le sens vertical et l'autre essentiellement dans le sens transversal et dans laquelle les éléments en forme de lames (14) convergent l'un vers l'autre vers le bas, adoptant ainsi un agencement sensiblement en forme de V.
